# FASCICULE DE BREVET EUROPEEN

(11) **EP 3 495 694 B1**
(45) Date de publication et mention de la délivrance du brevet: **04.11.2020**
(21) Numéro de dépôt: 18210870.4
(22) Date de dépôt: 06.12.2018
(51) Int. Cl.: F16H 57/04, F16H 1/16, H02K 7/116, B60S 1/16

(54) **MOTO-RÉDUCTEUR POUR SYSTÈME D'ESSUYAGE DE VÉHICULE AUTOMOBILE**
GETRIEBEMOTOR FÜR WISCHSYSTEM EINES KRAFTFAHRZEUGS
GEAR MOTOR FOR MOTOR VEHICLE WIPING SYSTEM

(30) Priorité: 08.12.2017 FR 1761816
(43) Date de publication de la demande: 12.06.2019
(73) Titulaire: Valeo Systèmes d'Essuyage, 78322 Le Mesnil Saint Denis (FR)
(72) Inventeur: HERRADA, Jose-Luis, 78322 LE MESNIL SAINT DENIS (FR)
(74) Mandataire: Valeo Vision

(56) Documents cités:
- DE-A1-102012 105 748
- DE-A1-102012 211 080

## Description

L'invention est relative à un moto-réducteur pour système d'essuyage de véhicule automobile.

Les moto-réducteurs sont essentiellement composés d'un moteur électrique couplé à un mécanisme réducteur chargé d'en démultiplier la vitesse pour obtenir un couple de transmission en rotation important.

Différents types de moteurs électriques peuvent être utilisés dans un moto-réducteur et notamment les moteurs électriques à courant continu sans balai qui présentent de nombreux avantages comme une grande durée de vie, un encombrement et une consommation réduits ainsi qu'un faible niveau sonore.

Un tel moto-réducteur trouve une application particulière dans un système d'essuyage de véhicule automobile comprenant un ou plusieurs balais d'essuyage, un mécanisme d'embiellage pour l'entrainement du ou des balais d'essuyage selon un mouvement de va et vient, ledit arbre de sortie du moto-réducteur entrainant le mécanisme d'embiellage du système d'essuyage.

Bien souvent le mécanisme réducteur est un couple vis sans fin /roue dentée, la vis sans fin typiquement métallique étant solidaire de l'arbre de rotation du rotor, la roue dentée étant solidaire de l'arbre de sortie du moto-réducteur, typiquement en plastique.

Des paliers tels que des roulements à billes, typiquement au nombre de deux ou trois sont utilisés pour guider en rotation l'arbre de rotation, chaque roulement à billes comportant une bague intérieure et une bague extérieure, et des billes aptes à rouler sur un chemin de la bague intérieure et sur un chemin de la bague extérieure.

Selon les constatations de l'inventeur, il est encore à noter qu'un réducteur constitué par un couple vis sans fin/roue dentée présente un faible rendement de transmission de puissance, voisin de 65%, la puissance perdue (*i.e.* 35%) se dissipant sous forme de chaleur dans la vis-sans fin et l'arbre de rotation en métal. Selon l'opinion de l'inventeur, les moto-réducteurs tels que connus de l'état de la technique peuvent être de refroidissement sensiblement amélioré. Moto-réducteurs de l'état de la technique sont divulguent dans les documents D1: DE102012211080 A1 ou D2: DE102012105748 A1. D1 montre un moto-réducteur avec un mécanisme réducteur vis sans fin qui comprend un dissipateur de chaleur et document D2 montre un moto-réducteur avec les caractéristiques du préambule de la revendication 1.

Le but de la présente invention est de pallier les inconvénients précités en proposant un moto-réducteur à couple vis-sans fin/roue dentée, de refroidissement optimisé.

Un autre but de la présente invention est de proposer un tel moto-réducteur permettant d'obtenir une bonne compacité selon l'axe longitudinal de l'arbre de rotation.

D'autres buts et avantages apparaitront au cours de la description qui n'est donnée qu'à titre indicatif et qui n'a pas pour but de la limiter.

Les buts de l'invention sont servi par un moto-réducteur selon la revendication 1.

Selon des caractéristiques optionnelles de l'invention prises seules ou en combinaison :
- ledit dissipateur de chaleur est disposé à proximité immédiate de la roue dentée, situé à une distance Δ inférieure ou égale à 4 mm de la roue dentée lors de sa rotation ;
- la largeur dudit dissipateur de chaleur, suivant la direction de l'arbre de rotation est comprise entre 1 fois et 3 fois la dimension de l'aimant multipolaire suivant cette direction ;
- le dissipateur de chaleur comprend une surface périphérique située localement en regard de la roue dentée à ladite distance Δ, ladite surface périphérique étant inclinée par rapport à l'axe de l'arbre de rotation de sorte à être orientée localement sensiblement tangentiellement à la roue dentée ;
- ledit dissipateur de chaleur est dans un matériau de conductivité thermique supérieure ou égale à 1 W.m⁻¹.K⁻¹;
- le matériau dudit au moins un dissipateur de chaleur est métallique ou alternativement le matériau dudit dissipateur de chaleur est un plastique chargé en particules métalliques ;
- les moyens formant paliers étant de diamètre extérieur D, le diamètre extérieur dudit au dissipateur de chaleur est supérieur ou égal à 0,6 D ;
- lesdits moyens formant paliers comprennent un palier pour le guidage de l'arbre de rotation du côté du stator du moteur électrique par référence à ladite vis sans fin , dit roulement côté stator, et dans lequel ledit dissipateur de chaleur est dans une position intermédiaire sur l'arbre de rotation entre la vis sans fin et ledit palier côté stator ;
- ledit aimant multipolaire comprend une bague formant N paires de pôles magnétique nord/sud, ladite bague étant coaxiale à l'arbre de rotation , présentant une épaisseur selon la direction radiale comprise entre 1 mm et 4 mm, ledit dissipateur de chaleur formant un support périphérique sur le diamètre interne de la bague, ledit support (72) reliant la bague audit arbre de rotation ;
- ledit dissipateur de chaleur présente des ailettes ;
- les ailettes sont agencées autour de l'axe de rotation du dissipateur de chaleur et configurées de manière à constituer des pales de ventilation, montées solidaires en rotation avec l'arbre de rotation ;
- lors du mouvement de l'arbre de rotation les pales de ventilations sont configurées pour créer un flux d'air pulsé dans un inter-espace semi-annulaire défini entre la périphérie de la roue dentée et une ceinture du carter s'étendant longitudinalement le long de la périphérie de la roue dentée, du côté opposé à l'arbre de rotation ;
- ladite ceinture du carter comprend sur sa paroi interne des nervures saillantes orientées longitudinalement à ladite ceinture.

L'invention sera mieux comprise à la lecture de la description suivante accompagnée des dessins en annexe parmi lesquels :

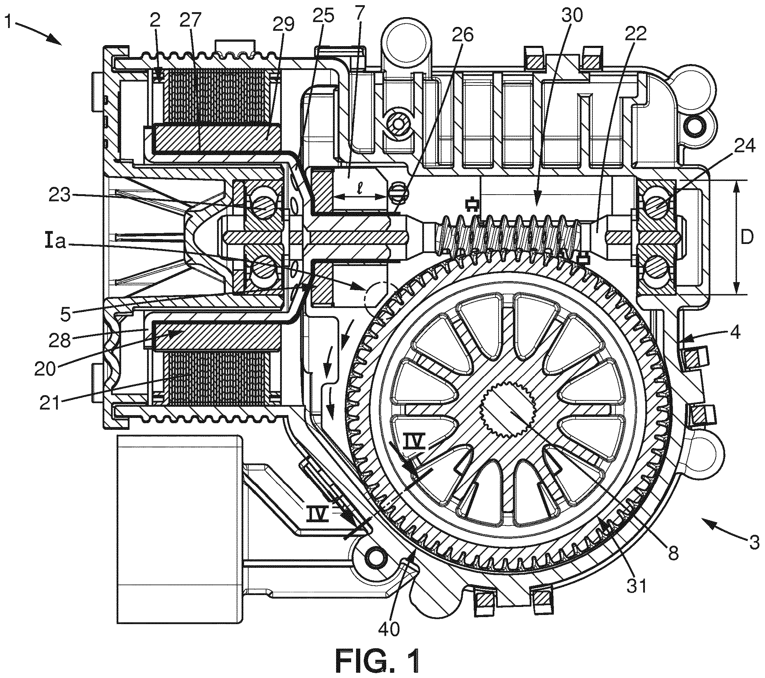

- La figure 1 est une vue de coupe selon un plan parallèle à l'axe de l'arbre de rotation du moteur, illustrant le moto-réducteur conforme à l'invention selon un mode de réalisation, y compris le stator, le rotor et l'arbre de rotation, le couple vis sans fin /roue dentée, et de manière notable, solidaire de l'arbre de rotation ledit aimant multipolaire, ainsi que le dissipateur de chaleur accolé audit aimant multipolaire, sous forme d'un élément plein,
- Les figures 2 et 3 sont des vues de côté et de face d'un dissipateur de chaleur à ailettes qui est peut être utilisé en remplacement de celui à élément plein illustré dans le moto-réducteur de la figure 1,
- La figure 4 est une vue selon la coupe de détail IV-IV tel qu'illustré à la figure 1, illustrant plus particulièrement les nervures saillantes sur la paroi intérieure de la ceinture du carter.

Aussi l'invention concerne un moto-réducteur 1 pour système d'essuyage de véhicule automobile comprenant :
- un moteur électrique 2 comportant :
   - un rotor 20 portant des éléments magnétiques 29, tels que des aimants permanents,
   - un stator 21 présentant des bobines d'excitation électromagnétique du rotor,
   - un arbre de rotation 22 solidaire du rotor,
- un mécanisme réducteur 3 reliant l'arbre de rotation 22 et un arbre de sortie 8 du moto-réducteur.

Un carter 4, typiquement métallique peut former une enveloppe de protection pour ledit mécanisme réducteur 3, voire le moteur électrique 2.

Le moteur électrique peut être à courant continu sans balai. Un tel moteur comprend un dispositif de détermination de la position angulaire du rotor 20 par rapport au stator 21. Une unité de commande (non illustrée) est configurée pour générer des signaux de commande pour alimenter les bobines d'excitation électromagnétique du stator 21 en fonction de la position angulaire du rotor déterminée par le dispositif de détermination de la position angulaire du rotor.

Le dispositif de détermination de la position angulaire du rotor comprend à cet effet un aimant multipolaire 5 solidaire en rotation du rotor, et un ou plusieurs capteurs à effet Hall (non illustrés) en des positions fixes, aptes à détecter les changements de domaines magnétiques de l'aimant multipolaire lors de la rotation du rotor.

Le mécanisme réducteur 3 comprend un couple vis sans fin 30 /roue dentée 31, la vis sans fin solidaire de l'arbre de rotation 22 du rotor 20, la roue dentée 31 solidaire de l'arbre de sortie 8 du moto-réducteur. Cet arbre de sortie 8 est sensiblement perpendiculaire à l'arbre de rotation 22 du moteur électrique 2. Le filet de la vis sans fin 30 peut être obtenu à partir de la matière venant de l'arbre de rotation 22, typiquement en métal. La roue dentée 31 peut être typiquement en matière plastique.

Le guidage en rotation de l'arbre de rotation du rotor 22 par rapport au carter 4 est assuré par des moyens formant paliers 23, 24. Les paliers 23, 34 utilisés peuvent être des roulements, des coussinets, ou toute autre forme de paliers connue de l'homme du métier.

Dans un tel moto-réducteur 1, les frottements générés entre la vis sans fin 30 et la roue dentée 31 du mécanisme réducteur 3 engendrent un échauffement important de la vis sans fin et de l'arbre de rotation 22.

L'invention s'intéresse toutefois ici à l'optimisation du refroidissement de la vis sans fin 30 et de l'arbre de rotation 22 du moteur électrique 2.

De manière notable et à cet effet, le moto-réducteur 1 comprend un dissipateur de chaleur 7, sous la forme d'un élément saillant radialement de l'arbre de rotation 22, distinct des moyens formant paliers 23,24 et distinct de l'aimant multipolaire 5, ledit dissipateur de chaleur 7 étant dans une position intermédiaire entre ledit aimant multipolaire 5 et la vis sans fin 30, disposé à proximité de la vis sans fin 30 sur ledit arbre de rotation 22.

L'élément saillant formant dissipateur de chaleur 7 comprend une portée interne 70 pour le montage sur l'arbre de rotation 22, directement ou indirectement par l'intermédiaire d'un manchon 26, ledit élément étant configuré pour former une surface d'échange thermique avec l'atmosphère interne au carter 4.

En fonctionnement, le dissipateur de chaleur 7 est configuré pour prélever la chaleur de l'arbre de rotation 22, à proximité de la vis sans fin 30, depuis sa portée interne 70 et transmettre les calories radialement jusqu'à la surface d'échange thermique dudit élément, susceptible d'être refroidie par l'atmosphère interne.

De manière notable on remarque encore que la distance Δ séparant ledit dissipateur de chaleur 7 de la roue dentée 31 est inférieure ou égale à la distance séparant ledit aimant multipolaire 5 de la roue dentée 31.

Selon un mode de réalisation, ledit dissipateur de chaleur 7 est disposé à proximité immédiate de la roue dentée 31, situé à une distance Δ inférieure ou égale à 4 mm de la roue dentée 31 lors de sa rotation, par exemple inférieure ou égale à 3 mm ou encore inférieure ou égale à 2 mm.

On remarque encore que ledit dissipateur de chaleur 7 peut comprendre une surface périphérique 71 située localement en regard de la roue dentée 31, notamment à la distance Δ de la roue dentée, inclinée par rapport à l'axe de l'arbre de rotation 22 de sorte à être orientée localement sensiblement tangentiellement à la roue dentée 31. Cette surface périphérique inclinée permet de maximiser autant que possible la surface d'échange de l'élément formant dissipateur de chaleur, en positionnant ledit élément saillant au plus près de la roue dentée. La largeur repérée 1 dudit dissipateur de chaleur 7, à savoir la dimension du dissipateur de chaleur suivant la direction de l'arbre de rotation, peut être comprise entre 1 fois et 3 fois la dimension de l'aimant multipolaire 5 suivant cette direction, par exemple comprise entre 1,5 fois et 2,5 fois la dimension de l'aimant multipolaire 5.

Le dissipateur de chaleur peut être dans un matériau de conductivité thermique supérieure ou égale à 1 W.m⁻¹.K⁻¹. En particulier le matériau dudit dissipateur de chaleur 7 peut être métallique. Le matériau peut encore être un plastique chargé en particules métalliques.

Les moyens formant paliers étant de diamètre extérieur D, le diamètre extérieur dudit dissipateur de chaleur 7 peut être supérieur ou égal à 0,6 D, par exemple supérieur ou égal à 0,7 D, ou encore supérieur à 0,8 D. Le diamètre extérieur dudit au dissipateur de chaleur 7 peut être inférieur ou égal à 1,5 D, par exemple inférieur ou égal à 1,3 D.

Lesdits moyens formant paliers 23,24 peuvent comprendre un palier 23 pour le guidage de l'arbre de rotation du côté du stator 21 du moteur électrique 2 par référence à ladite vis sans fin 30, dit roulement côté stator, suivant l'axe de l'arbre 22.

Ledit dissipateur de chaleur 7 peut être dans une position intermédiaire sur l'arbre de rotation 22 entre la vis sans fin 30 et ledit palier 23 côté stator.

Selon un mode de réalisation, ledit dissipateur de chaleur 7 est un élément accolé à l'aimant multipolaire 5, saillant latéralement de l'aimant multipolaire 5 vers ladite vis sans fin 30 constitué dans un matériau distinct de l'aimant multipolaire 5.

Selon un mode de réalisation, ledit aimant multipolaire 5 peut comprendre une bague 50 formant N paires de pôles magnétique nord/sud, ladite bague 50 étant coaxiale à l'arbre de rotation 22, présentant une épaisseur ep selon la direction radiale comprise entre 1 mm et 4 mm. Ledit dissipateur de chaleur 7 forme alors un support périphérique 72 sur le diamètre interne de la bague 50, ledit support 72 reliant la bague 50 audit arbre de rotation 22.

Ledit dissipateur de chaleur 7 peut encore présenter des ailettes 73 formant la surface d'échange avec l'atmosphère interne.

Selon un mode de réalisation, les ailettes 73 peuvent être agencées autour de l'axe de rotation du dissipateur de chaleur 7, et configurées de manière à constituer des pales de ventilation, montées solidaires en rotation avec l'arbre de rotation 22. Par exemple et lors du mouvement de l'arbre de rotation 22 autour de son axe, les pales de ventilations sont configurées pour créer un flux d'air pulsé dans un inter-espace semi-annulaire défini entre la périphérie de la roue dentée 31 et une ceinture 40 du carter 4 s'étendant longitudinalement le long de la périphérie de la roue dentée 31, du côté opposé à l'arbre de rotation 22.

La ceinture 40 du carter 4 peut comprendre sur sa paroi interne des nervures 41 saillantes orientées longitudinalement à ladite ceinture 40, et qui ont pour fonction d'augmenter la surface d'échange thermique entre l'atmosphère interne au carter et la paroi interne du carter. Ces nervures internes sont destinées à être léchées par le flux d'air pulsé.

De manière notable, le palier 23 de guidage du côté du stator peut être disposé interne à l'ensemble rotor 20 et stator 21, logé dans un évidement interne au rotor 20. Cette extrémité de l'arbre de rotation peut ainsi être avantageusement guidée par le palier 23, sans nécessiter une longueur d'arbre telle que son extrémité ressorte au-delà du rotor. D'autre part, le montage de ce palier 23 interne au rotor, ne nécessite pas de disposer d'une portée sur la section de longueur utile de l'arbre de rotation extérieur au rotor, et qui est déjà utilisée pour supporter la vis sans fin et/ou pour supporter l'aimant polaire 5 : cette section de longueur de l'arbre externe au rotor peut être réduite au minimum, et dans l'objectif d'augmenter la compacité du moto-réducteur suivant cette direction.

A cet effet, un support creux 25 peut porter lesdits éléments magnétiques 29 sur sa circonférence et est agencé de manière coaxiale et solidaire en rotation de l'arbre de rotation 22 : avantageusement ce support creux 25 vient coiffer ledit palier 23 qui assure le guidage de l'extrémité longitudinale de l'arbre de rotation 22 du côté du stator du moteur électrique 2.

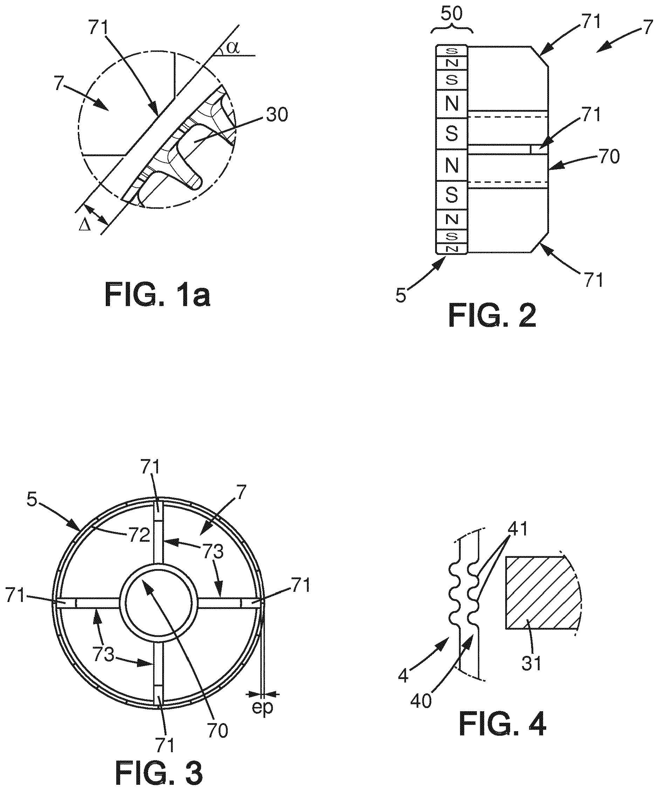

Ce support creux 25 peut encore s'étendre axialement au-delà de l'extrémité longitudinale de l'arbre de rotation 22, coté stator du moteur électrique. Cela permet en particulier de disposer lesdits éléments magnétiques 29 du rotor au moins partiellement au-delà de l'extrémité longitudinale de l'arbre de rotation 22, et comme illustré à titre d'exemple à la figure 3. Ce support creux est par exemple un corps de révolution qui comprend une partie creuse, tubulaire, de diamètre interne permettant d'y loger intérieurement le palier 23, voire une partie saillante du carter 4.

Ce support creux 25 peut comprendre encore un manchon 26 permettant la fixation du support creux 25 sur l'arbre de rotation 22. Ce manchon 26 vient se fixer dans une position sur l'arbre de rotation 22 intermédiaire entre le mécanisme réducteur 3 et le palier 23. Le diamètre intérieur du manchon 26 peut être ajusté au diamètre externe de l'arbre de rotation en cette position intermédiaire. Il peut s'agir d'un ajustement serré permettant un assemblage par frettage entre le support creux 25 et ledit arbre de rotation 22. Ce manchon 26 peut encore être fixé à l'arbre 22 par collage.

On remarque que l'aimant multipolaire 5 peut prendre la forme d'une bague montée autour de l'arbre de rotation. Les domaines magnétiques (nord/sud) s'étendent en alternance suivant la circonférence de la bague. Cet aimant multipolaire 5 peut être solidaire dudit support creux 25, agencé autour dudit manchon 26 de fixation dudit support creux 25.

Ledit support creux 25 comprend une section de longueur 27 de support des éléments magnétiques 29. Cette section 27 de longueur de support est sensiblement cylindrique. Les éléments magnétiques 29 du rotor sont solidarisés sur la paroi externe du cylindre. Un épaulement 28, en particulier sous forme d'une couronne, peut s'étendre radialement vers l'extérieur à l'extrémité distale de ladite section 27 de longueur de support des éléments magnétiques. Cet épaulement 28 forme une butée latérale pour lesdits éléments magnétiques 29 du rotor 20. Cet épaulement 28 facilite l'alignement des éléments magnétiques suivant une même ligne diamétrale.

On remarque encore que le support creux 25 présente une section de longueur de liaison reliant le manchon 26 et ladite section de longueur 27 de support, cylindrique, de plus grand diamètre que le manchon 26.

Le support creux 25 peut être constitué essentiellement par un élément d'un seul tenant, en particulier une tôle formée pour constituer consécutivement, le manchon 26, la section de liaison, la section 27 de support cylindrique, voire ledit épaulement 28.

La portée interne 70 dudit élément formant dissipateur de chaleur 7 peut ainsi engager directement avec une portée externe de l'arbre de rotation 22, ou encore indirectement par l'intermédiaire d'un manchon, tel que le manchon 26 dudit support creux 25.

On remarque encore que l'arbre de rotation 22 peut être guidé en rotation uniquement par deux paliers 23, 24 disposés aux deux extrémités de l'arbre de rotation 22, à savoir le palier 23 coté du stator 21 du moteur et un autre palier 24, à l'autre extrémité de l'arbre de rotation 22.

### NOMENCLATURE

1. Moto-réducteur,
2. Moteur électrique,
20. Rotor,
21. Stator,
22. Arbre de rotation,
23,24. Paliers, respectivement côté stator, et roulement côté opposé au stator,
25. Support creux,
26. Manchon de fixation (Support creux),
27. Section de longueur cylindrique (Support creux),
28. Epaulements,
29. Eléments magnétiques,
3. Mécanisme réducteur,
30. Vis sans fin,
31. Roue dentée,
4. Carter,
40. Ceinture,
41. Nervures internes,
5. Aimant multipolaire,
50. Bague,
7. Dissipateurs de chaleur,
70. Portée interne du dissipateur de chaleur pour le montage sur l'arbre de rotation,
71. Surface périphérique inclinée, située à proximité immédiate de la roue dentée,
72. Support périphérique interne pour la bague de l'aimant multipolaire,
73. Ailettes, notamment pales de ventilation.
8. Arbre de sortie du moto-réducteur
Δ. Distance séparent le dissipateur de chaleur de la roue dentée.
D. Diamètre extérieur paliers,
1. Largeur du dissipateur de chaleur (dimension suivant la direction de l'arbre de rotation),
ep. Epaisseur bague

## Revendications

1. Moto-réducteur (1) pour système d'essuyage de véhicule automobile comprenant :
- un moteur électrique (2) comportant :
- un rotor (20) comprenant des éléments magnétiques,
- un stator (21) présentant des bobines d'excitation électromagnétique du rotor,
- un arbre de rotation (22) solidaire du rotor,
- un mécanisme réducteur (3) reliant l'arbre de rotation (22) et un arbre de sortie du moto-réducteur,
- un carter (4) formant une enveloppe de protection pour ledit mécanisme réducteur, voire le moteur électrique (2)
et dans lequel ledit mécanisme réducteur (3) comprend un système vis sans fin /roue dentée, la vis sans fin (30) étant solidaire de l'arbre de rotation du rotor (22), la roue dentée (31) solidaire d'un arbre de sortie (8) du moto-réducteur,
- des moyens formant paliers (23, 24) assurant le guidage en rotation de l'arbre de rotation du rotor (22) par rapport au carter (4),
un dispositif de détermination de la position angulaire du rotor comprenant un aimant multipolaire (5) solidaire de l'arbre de rotation (22) du rotor (20),
**[caractérisé en ce que]** et dans lequel le moto-réducteur (1) comprend un dissipateur de chaleur (7) accolé à l'aimant multipolaire (5) et constitué dans un matériau distinct dudit aimant multipolaire (5), sous la forme d'un élément saillant radialement de l'arbre de rotation (22) et latéralement dudit aimant multipolaire (5) vers la vis sans fin (30), distinct des moyens formant paliers (23,24) et de l'aimant multipolaire (5), ledit dissipateur de chaleur (7) étant dans une position intermédiaire entre ledit aimant multipolaire (5) et la vis sans fin (30), disposé à proximité de la vis sans fin (30) sur ledit arbre de rotation (22), comprenant une portée interne (70) pour le montage sur l'arbre de rotation (22), ledit élément étant configuré pour former une surface d'échange thermique avec l'atmosphère interne au carter (4), la distance Δ séparant ledit dissipateur de chaleur (7) de la roue dentée (31) étant inférieure ou égale à la distance séparant ledit aimant multipolaire (5) de la roue dentée (31).

2. Moto-réducteur selon la revendication 1, dans lequel ledit dissipateur de chaleur (7) est disposé à proximité immédiate de la roue dentée (31), situé à une distance Δ inférieure ou égale à 4 mm de la roue dentée (31) lors de sa rotation.

3. Moto-réducteur selon la revendication 1 ou 2, dans lequel la largeur (1) dudit dissipateur de chaleur (7), suivant la direction de l'arbre de rotation (22) est comprise entre 1 fois et 3 fois la dimension de l'aimant multipolaire (5) suivant cette direction.

4. Moto-réducteur selon la revendication 2 ou 3, dans lequel ledit dissipateur de chaleur (7) comprend une surface périphérique (71) située localement en regard de la roue dentée (31) à ladite distance Δ, ladite surface périphérique étant inclinée par rapport à l'axe de l'arbre de rotation (22) de sorte à être orientée localement sensiblement tangentiellement à la roue dentée (31).

5. Moto-réducteur selon l'une des revendications 1 à 4, dans lequel ledit dissipateur de chaleur est dans un matériau de conductivité thermique supérieure ou égale à 1 W.m⁻¹.K⁻¹.

6. Moto-réducteur selon la revendication 5, dans lequel le matériau dudit dissipateur de chaleur est métallique.

7. Moto-réducteur selon la revendication 5, dans lequel le matériau dudit dissipateur de chaleur est un plastique chargé en particules métalliques.

8. Moto-réducteur selon l'une des revendications 1 à 7, dans lequel les moyens formant paliers étant de diamètre extérieur D, le diamètre extérieur dudit au dissipateur de chaleur (7) est supérieur ou égal à 0,6 D.

9. Moto-réducteur selon l'une des revendication 1 à 8, dans lequel lesdits moyens formant paliers (23,24) comprennent un palier (23) pour le guidage de l'arbre de rotation du côté du stator (21) du moteur électrique (2) par référence à ladite vis sans fin (30), dit roulement côté stator, et dans lequel ledit dissipateur de chaleur (7) est dans une position intermédiaire sur l'arbre de rotation (22) entre la vis sans fin (30) et ledit palier (23) côté stator.

10. Moto-réducteur selon l'une des revendications 1 à 9, dans lequel ledit aimant multipolaire (5) comprend une bague (50) formant N paires de pôles magnétique nord/sud, ladite bague (50) étant coaxiale à l'arbre de rotation (22), présentant une épaisseur (ep) selon la direction radiale comprise entre 1 mm et 4 mm, ledit dissipateur de chaleur (7) formant un support périphérique (72) sur le diamètre interne de la bague (50), ledit support (72) reliant la bague (50) audit arbre de rotation (22).

11. Moto-réducteur selon l'une des revendications 1 à 10, dans lequel ledit dissipateur de chaleur (7) présente des ailettes (73).

12. Moto-réducteur selon la revendication 11 dans lequel les ailettes (73) sont agencées autour de l'axe de rotation du dissipateur de chaleur (7) et configurées de manière à constituer des pales de ventilation, montées solidaires en rotation avec l'arbre de rotation (22).

13. Moto-réducteur selon la revendication 12, dans lequel lors du mouvement de l'arbre de rotation (22), les pales de ventilations sont configurées pour créer un flux d'air pulsé dans un inter-espace semi-annulaire défini entre la périphérie de la roue dentée (31) et une ceinture (40) du carter (4) s'étendant longitudinalement le long de la périphérie de la roue dentée (31), du côté opposé à l'arbre de rotation (22).

14. Moto-réducteur selon la revendication 13, dans lequel ladite ceinture (40) du carter (4) comprend sur sa paroi interne des nervures (41) saillantes orientées longitudinalement à ladite ceinture (40).

## Patentansprüche

1. Getriebemotor (1) für ein Wischsystem eines Kraftfahrzeugs, der Folgendes beinhaltet:
- einen Elektromotor (2), der Folgendes umfasst:
- einen Rotor (20), der magnetische Elemente beinhaltet,
- einen Stator (21), der Spulen zur elektromagnetischen Erregung des Rotors aufweist,
- eine Drehwelle (22), die fest an dem Rotor angebracht ist,
- einen Untersetzungsmechanismus (3), der die Drehwelle (22) und eine Ausgangswelle des Getriebemotors verbindet,
- ein Gehäuse (4), das eine Schutzabdeckung für den Untersetzungsmechanismus und sogar den Elektromotor (2) bildet,
und wobei der Untersetzungsmechanismus (3) ein Schnecke-Zahnrad-System beinhaltet, wobei die Schnecke (30) fest an der Drehwelle (22) des Rotors angebracht ist und das Zahnrad (31) fest an einer Ausgangswelle (8) des Getriebemotors angebracht ist,
- lagerbildende Mittel (23, 24), die die Drehführung der Drehwelle (22) des Rotors mit Bezug auf das Gehäuse (4) gewährleisten,
wobei eine Vorrichtung zum Bestimmen der Winkelposition des Rotors einen mehrpoligen Magneten (5) beinhaltet, der fest an der Drehwelle (22) des Rotors (20) angebracht ist,
**[dadurch gekennzeichnet, dass]** und wobei der Getriebemotor (1) einen Wärmeableiter (7) beinhaltet, der an dem mehrpoligen Magneten (5) befestigt ist und aus einem Material hergestellt ist, das sich von dem des mehrpoligen Magneten (5) unterscheidet, in der Form eines radial von der Drehwelle (22) und seitlich von dem mehrpoligen Magneten (5) zu der Schnecke (30) hin vorspringenden Elements, das von den lagerbildenden Mitteln (23, 24) und dem mehrpoligen Magneten (5) getrennt ist, wobei sich der Wärmeableiter (7) in einer Zwischenposition zwischen dem mehrpoligen Magneten (5) und der Schnecke (30) befindet, in der Nähe der Schnecke (30) auf der Drehwelle (22) angeordnet ist und einen Innenraum (70) für die Montage auf der Drehwelle (22) beinhaltet, wobei das Element dazu konfiguriert ist, eine Wärmetauschfläche mit der Innenatmosphäre des Gehäuses (4) zu bilden, wobei der Abstand Δ, der den Wärmeabieiter (7) von dem Zahnrad (31) trennt, kleiner als oder gleich dem Abstand ist, der den mehrpoligen Magneten (5) von dem Zahnrad (31) trennt.

2. Getriebemotor nach Anspruch 1, wobei der Wärmeableiter (7) in unmittelbarer Nähe des Zahnrads (31) angeordnet ist und sich während seiner Drehung in einem Abstand Δ, der kleiner als oder gleich 4 mm ist, von dem Zahnrad (31) entfernt befindet.

3. Getriebemotor nach Anspruch 1 oder 2, wobei die Breite (1) des Wärmeableiters (7) in Richtung der Drehwelle (22) zwischen dem 1-fachen und dem 3-fachen des Maßes des mehrpoligen Magneten (5) in dieser Richtung liegt.

4. Getriebemotor nach Anspruch 2 oder 3, wobei der Wärmeableiter (7) eine Umfangsfläche (71) beinhaltet, die sich lokal mit dem Abstand Δ gegenüber dem Zahnrad (31) befindet, wobei die Umfangsfläche mit Bezug auf die Achse der Drehwelle (22) geneigt ist, sodass sie lokal im Wesentlichen tangential zu dem Zahnrad (31) ausgerichtet ist.

5. Getriebemotor nach einem der Ansprüche 1 bis 4, wobei der Wärmeableiter aus einem Material mit einer Wärmeleitfähigkeit größer als oder gleich 1 W.m⁻¹.K⁻¹ besteht.

6. Getriebemotor nach Anspruch 5, wobei das Material des Wärmeableiters metallisch ist.

7. Getriebemotor nach Anspruch 5, wobei das Material des Wärmeableiters ein mit metallischen Partikeln versetzter Kunststoff ist.

8. Getriebemotor nach einem der Ansprüche 1 bis 7, wobei, während die lagerbildenden Mittel einen Außendurchmesser D aufweisen, der Außendurchmesser des Wärmeableiters (7) größer als oder gleich 0,6 D ist.

9. Getriebemotor nach einem der Ansprüche 1 bis 8, wobei die lagerbildenden Mittel (23, 24) ein Lager (23) zum Führen der Drehwelle auf der Seite des Stators (21) des Elektromotors (2) mit Bezug auf die Schnecke (30) beinhalten, das als statorseitiges Wälzlager bezeichnet wird, und wobei sich der Wärmeableiter (7) auf der Drehwelle (22) in einer Zwischenposition zwischen der Schnecke (30) und dem statorseitigen Lager (23) befindet.

10. Getriebemotor nach einem der Ansprüche 1 bis 9, wobei der mehrpolige Magnet (5) einen Ring (50) beinhaltet, der N Paare aus magnetischen Nord-/Südpolen bildet, wobei der Ring (50) zu der Drehwelle (22) koaxial ist und in der radialen Richtung eine Dicke (ep) zwischen 1 mm und 4 mm aufweist, wobei der Wärmeableiter (7) an dem Innendurchmesser des Rings (50) eine Umfangsstütze (72) bildet, wobei die Stütze (72) den Ring (50) mit der Drehwelle (22) verbindet.

11. Getriebemotor nach einem der Ansprüche 1 bis 10, wobei der Wärmeableiter (7) Flügel (73) aufweist.

12. Getriebemotor nach Anspruch 11, wobei die Flügel (73) um die Drehachse des Wärmeableiters (7) eingerichtet sind und so konfiguriert sind, dass sie Lüftungsschaufeln darstellen, die drehfest an der Drehwelle (22) montiert sind.

13. Getriebemotor nach Anspruch 12, wobei die Lüftungsschaufeln während der Bewegung der Drehwelle (22) dazu konfiguriert sind, auf der der Drehwelle (22) gegenüberliegenden Seite einen gepulsten Luftstrom in einem halbringförmigen Zwischenraum zu erzeugen, welcher zwischen dem Umfang des Zahnrads (31) und einem Gurt (40) des Gehäuses (4), der sich längs entlang des Umfangs des Zahnrads (31) erstreckt, definiert ist.

14. Getriebemotor nach Anspruch 13, wobei der Gurt (40) des Gehäuses (4) an seiner Innenwand vorspringende Rippen (41) beinhaltet, die längs zu dem Gurt (40) ausgerichtet sind.

## Claims

1. Geared motor (1) for a motor-vehicle wiping system comprising:
- an electric motor (2) including:
- a rotor (20) including magnetic elements,
- a stator (21) having the electromagnetic excitation windings of the rotor,
- a rotary shaft (22) rigidly connected to the rotor,
- a reduction gear (3) linking the rotary shaft (22) and an output shaft of the geared motor,
- a casing (4) forming a protective envelope for said reduction gear, or the electric motor (2),
and in which said reduction gear (3) includes a worm screw and worm wheel gear, the worm screw (30) being rigidly connected to the rotary shaft of the rotor (22), the worm wheel (31) being rigidly connected to an output shaft (8) of the geared motor,
- bearing means (23, 24) for guiding the rotary shaft of the rotor (22) in rotation in relation to the casing (4),
a determination device for determining the angular position of the rotor including a multi-pole magnet (5) that is rigidly connected to the rotary shaft (22) of the rotor (20),
**[characterized in that]** and in which the geared motor (1) includes a heat sink (7) attached to the multi-pole magnet (5) and made of a different material from the multi-pole magnet (5), in the form of an element projecting radially from the rotary shaft (22) and laterally from the multi-pole magnet (5) towards said worm screw (30), that is distinct from the bearing means (23, 24) and the multi-pole magnet (5), said heat sink (7) being in an intermediate position between said multi-pole magnet (5) and the worm screw (30), arranged in the vicinity of the worm screw (30) on said rotary shaft, (22) including an internal bush (70) for assembly of the rotary shaft (22), said element being designed to form a heat-exchange surface with the internal atmosphere of the casing (4), the distance Δ separating said heat sink (7) from the worm wheel (31) being equal to or less than the distance separating said multi-pole magnet (5) from the worm wheel (31).

2. Geared motor according to Claim 1, in which said heat sink (7) is arranged in the immediate vicinity of the worm wheel, (31) positioned at a distance Δ equal to or less than 4 mm from the worm wheel (31) when same is in rotation.

3. Geared motor according to Claim 1 or 2, in which the width (1) of said heat sink (7) in the direction of the rotary shaft (22) is between 1 and 3 times the dimension of the multi-pole magnet (5) in said direction.

4. Geared motor according to Claim 2 or 3, in which said heat sink (7) has a peripheral surface (71) positioned locally facing the worm wheel (31) at said distance Δ, said peripheral surface being inclined in relation to the axis of the rotary shaft (22) such as to be locally oriented substantially tangentially to the worm wheel (31).

5. Geared motor according to one of Claims 1 to 4, in which said heat sink is made of a material with thermal conductivity equal to or greater than 1 W.m⁻¹.K⁻¹.

6. Geared motor according to Claim 5, in which the material used to make said heat sink is metal.

7. Geared motor according to Claim 5, in which the material used to make said heat sink is a plastic reinforced with metal particles.

8. Geared motor according to one of Claims 1 to 7, in which the external diameter of the bearing means is D and the external diameter of said heat sink (7) is equal to or greater than 0.6 D.

9. Geared motor according to one of Claims 1 to 8, in which said bearing means (23, 24) include a bearing (23) for guiding the rotary shaft on the side of the electric motor (2) with the stator (21) with reference to said worm screw (30), referred to as the stator-side roller bearing, and in which said heat sink (7) is in an intermediate position on said rotary shaft (22) between the worm screw (30) and said stator-side bearing (23).

10. Geared motor according to one of Claims 1 to 9, in which said multi-pole magnet (5) includes a ring (50) forming N pairs of north/south magnetic poles, said ring (50) being coaxial with the rotary shaft (22), having a thickness (ep) in the radial direction of between 1 mm and 4 mm, said heat sink (7) forming a peripheral support (72) on the internal diameter of the ring (50), said support (72) linking the ring (50) to said rotary shaft (22).

11. Geared motor according to one of Claims 1 to 10, in which said heat sink (7) has fins (73).

12. Geared motor according to Claim 11, in which the fins (73) are arranged about the axis of rotation of the heat sink (7) and designed to form ventilation blades constrained to rotate with the rotary shaft (22).

13. Geared motor according to Claim 12, in which, during movement of the rotary shaft (22), the ventilation blades are designed to create a pulsed air flow in a semi-annular interspace defined between the periphery of the worm wheel (31) and a belt (40) of the casing (4) extending longitudinally about the periphery of the worm wheel (31), on the side opposite the rotary shaft (22).

14. Geared motor according to Claim 13, in which said belt (40) of the casing (4) includes projecting ribs (41) on the inner wall thereof that are oriented longitudinally on said belt (40).
